# EUROPEAN PATENT APPLICATION

(11) **EP 3 330 855 A1**
(43) Date of publication of application: **06.06.2018**
(21) Application number: 17205034.6
(22) Date of filing: 01.12.2017
(51) Int. Cl.: G06F 9/50

(54) **MANAGING HARDWARE RESOURCES**

(30) Priority: 02.12.2016 US 201615368233
(71) Applicant: Hewlett Packard Enterprise Development LP, Houston, TX 77070 (US)
(72) Inventor: BEYH, Yehia, Houston, TX 77070 (US)
(74) Representative: Haseltine Lake LLP

(57) **Abstract**

Examples relate to managing hardware devices. In one example, a computing device may receive a virtual network function specifying a particular function to be performed by at least one virtual machine; identify a particular performance metric for the virtual network function; determine, using the particular performance metric and a default resource configuration, a first infrastructure configuration specifying a value for each of a plurality of infrastructure options, each of the plurality of infrastructure options specifying a feature of the at least one virtual machine; and determine, using the particular performance metric and the first infrastructure configuration, a first resource configuration specifying a value for each of a plurality of virtualized hardware resources for the at least one virtual machine.

## Description

### BACKGROUND

Computing systems often make use of multiple different types of computing devices for a variety of different purposes. For example, cloud computing system may include many server computers, network devices, and storage devices; an enterprise network may include the foregoing devices and also include personal computers. These systems are typically managed by one or more system administrators, who determine when to add, remove, or update the various devices operating in the computing systems.

### BRIEF DESCRIPTION OF THE DRAWINGS

The following detailed description references the drawings, wherein:
FIG. 1 is a block diagram of an example computing device for managing hardware resources.
FIG. 2A is an example data flow depicting the management of hardware resources.
FIG. 2B is an example user interface for displaying information during the management of hardware resources.
FIG. 3 is a flowchart of an example method for managing hardware resources.
FIG. 4 is a flowchart of an example method for the management of hardware resources.

### DETAILED DESCRIPTION

In situations where computing systems use multiple devices to perform computing tasks, a hardware resource management tool may facilitate the monitoring and/or management of the underlying hardware resources of these systems, e.g., from small scale systems that make use of very few hardware resources to large scale systems that make use of hundreds or even thousands of underlying hardware resources. For example, a hardware resource management system may facilitate the management of the underlying hardware devices for a provider of cloud computing infrastructure. Aspects of hardware resource management may include, in some implementations, discovery of new hardware resources and their capabilities, pooling hardware resources base on capabilities, monitoring of hardware resources and determining when resources are to be deactivated or additional resources deployed, providing an interface allowing selective management of the hardware resources, and implementing deployments or changes to the hardware resources.

By way of example, a hardware manager for a cloud computing environment may monitor several different types of computing hardware used to perform various tasks and run various applications. Underlying hardware may include, for example, compute servers for hosting virtual machines, network devices for performing a variety of network-related functions, and storage devices for storing data. In a situation where a new hardware resource, such as a server, is connected to the cloud computing environment, the hardware manager may identify the hardware attributes for the new hardware resource. The hardware attributes may be used to determine which type of devices was added, and that new hardware device may be pooled with other existing devices that perform similar functions. For example, a new storage device may be detected and associated with a pool of storage devices based on its hardware attributes.

Connected hardware devices that are not in use may be referred to as available resources. In the example, above, the storage device added to the cloud computing infrastructure may not be in use, but may be available for deployment. The hardware manager may keep track of available resources and, upon request, provide available resources for deployment. For example, in response to a request from a user, the hardware manager may provide a list of available resources. In some implementations, the hardware manager may monitor currently deployed resources and provide available resources for deployment in response to certain conditions, e.g., deploying an additional storage device in response to current system storage capacity reaching a threshold utilization. The hardware manager may, in some implementations, provide an interface through which a user may manage a system, such as a cloud computing environment. The interface may provide, for example, a user with a view of the deployed and available hardware resources, the hardware attributes of the hardware resources, performance data associated with the system and/or the hardware resources, and/or utilization data for the hardware resources. Further details regarding the determination of virtual network function configurations are described in the paragraphs that follow.

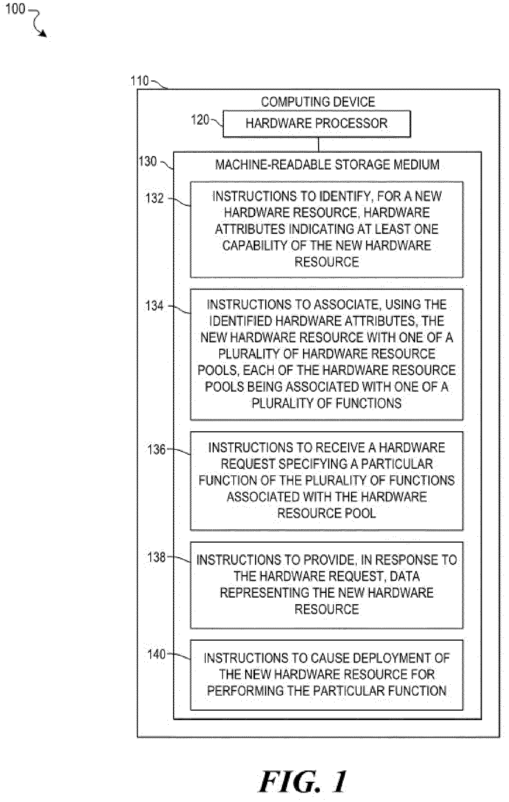

Referring now to the drawings, FIG. 1 is a block diagram 100 of an example computing device 110 for managing hardware devices. Computing device 110 may be, for example, a personal computer, a server computer, cluster of computers, or any other similar electronic device capable of processing data. In the example implementation of FIG. 1, the computing device 110 includes a hardware processor, 120, and machine-readable storage medium, 130.

Hardware processor 120 may be one or more central processing units (CPUs), semiconductor-based microprocessors, and/or other hardware devices suitable for retrieval and execution of instructions stored in machine-readable storage medium 130. Hardware processor 120 may fetch, decode, and execute instructions, such as 132-140, to control processes for managing hardware devices. As an alternative or in addition to retrieving and executing instructions, hardware processor 120 may include one or more electronic circuits that include electronic components for performing the functionality of one or more instructions, e.g., a Field Programmable Gate Array (FPGA) or Application Specific Integrated Circuit (ASIC).

A machine-readable storage medium, such as 130, may be any electronic, magnetic, optical, or other physical storage device that contains or stores executable instructions. Thus, machine-readable storage medium 130 may be, for example, Random Access Memory (RAM), non-volatile RAM (NVRAM), an Electrically Erasable Programmable Read-Only Memory (EEPROM), a storage device, an optical disc, and the like. In some implementations, storage medium 130 may be a non-transitory storage medium, where the term "non-transitory" does not encompass transitory propagating signals. As described in detail below, machine-readable storage medium 130 may be encoded with executable instructions 132-140, for managing hardware devices.

As shown in FIG. 1, the hardware processor 120 executes instructions 132 to identify, for a new hardware resource, hardware attributes indicating at least one capability of the new hardware resource. For example, a new server computer may be connected to a group of hardware devices that are used to provide cloud computing resources to a variety of end-users. The attributes of the new server may be identified, e.g., using software and/or hardware that operates on the new hardware device(s), the hardware manager, or a separate resource attribute discovery device. Hardware attributes may include any number of hardware features for the corresponding hardware devices, such as a hardware model, processor core count, RAM capacity, hypervisor type, graphical processing unit (GPU) type, local flash capacity, data storage capacity, data storage type, and/or network speed. Hardware attributes need not explicitly specify hardware capabilities, but may indicate capabilities through implication, e.g., a model number of a hardware device may not specify a capability, but a model number may be used to determine capabilities, such as CPU speed, GPU speed, storage capacity, RAM capacity, etc.

The hardware processor 120 executes instructions 134 to associate, using the identified hardware attributes, the new hardware resource with one of a plurality of hardware resource pools, each of the hardware resources pools being associated with one of a plurality of functions (e.g., a compute function, a storage function, a network function, etc.). Hardware resource pools may be used to pool together resources that provide similar functionality, such as a compute resource pool for providing virtual machines, a storage pool for hard drives and other storage devices, and a network pool for network devices such as switches, routers, and load balancers. Any number of resource pools may be used, and the criteria used to pool hardware devices may be set to certain hardware attributes and/or functionality by default and/or configurable to allow hardware resources to be pooled based on any given attribute or function. By way of example, a new server computer may be assigned to a compute pool based on its number of processing cores, RAM capacity, and GPU type. A new hard drive may be assigned to the storage pool based on the data storage capacity and data storage type. A new switch may be associated with the network pool based on the hardware model and network speed attributes.

In situations where a new hardware resource is pooled based on functionality, certain identified attributes may provide an indication of the function and/or capabilities associated with the hardware device(s). For example, hardware models may be one way to associate hardware resources with resource pools. E.g., each model number may be associated with a predetermined pool, e.g., based on manufacturer specifications, user input, and/or a predefined list of hardware model/resource pool associations.

The hardware processor 120 executes instructions 136 to receive a hardware request specifying a particular function of the plurality of functions associated with the hardware resource pools. In some implementations, the hardware request is received as a result of user input, e.g., a system administrator interacts with a user interface, causing a hardware manager to receive a request for hardware associated with a particular function. For example, the system administrator may want to deploy an additional compute server to provide virtual machines, and interaction(s) with a user interface may result in a hardware request being provided to computing device 110.

In some implementations, a hardware request may be provided in response to a triggering condition, such as a threshold resource utilization being met. For example, a hardware manager may establish a utilization threshold for compute servers, where a new hardware request will be issued in response to memory utilization or CPU utilization reaching 80% utilization over a certain period of time. In a situation where that threshold level of utilization is met, a hardware request may be issued for a new hardware device for performing compute server functionality. Other triggering conditions may also be used, such as a condition that triggers a hardware request in response to another hardware device being inactivated.

In some implementations, a hardware request is provided by an application, such as a new application to be run on a cloud computing system, an existing application currently executing on active computing system resources, or a separate hardware monitoring application. The hardware function specified by the request may be specified by particular hardware attributes / capabilities included in the request. This may allow, for example, an application to request, from the hardware manager, specific types of hardware with specific hardware attributes / capabilities. Hardware requests may include other information and specifics to facilitate selection of hardware resources to deploy, such as a request for a compute server with the most available RAM, or for a storage resource between 10 and 100 TB of data storage capacity.

The hardware processor 120 executes instructions 138 to provide, in response to the hardware request, data representing the new hardware resource. In some implementations, the data representing the new hardware resource is provided for display on a display device associated with the computing device 120. For example, the new hardware resource may be displayed in a user interface with data specifying the hardware attributes of the new hardware resource. In this example, a user may use the user interface to view the new hardware device, its associated resource pool, and its hardware attributes.

In some implementations, data representing the new hardware resource may be provided to a deployment module or device, which may be hardware and/or software included in the computing device 110 or in a separate device. A deployment module or device may be used, for example, in situations where deployment of the new hardware device is to occur in response to the hardware or application request, e.g., without user interaction. Using the example utilization threshold for compute servers above, in some implementations data representing a new compute server may be provided to a deployment module for deploying the new compute server. As another example, in response to an application request for compute servers that have GPUs, the computing device 110 may provide data representing, to the application, the available compute servers with GPUs and the specific information regarding those GPUs.

The hardware processor 120 executes instructions 140 to cause deployment of the new hardware resource for performing the particular function. For example, the computing device 110 may communicate, to a deployment module or device, instructions that cause the deployment module or device to deploy the new hardware resource. Using the new compute server example above, the new compute server may be deployed and added to the pool of active compute servers of the cloud computing infrastructure.

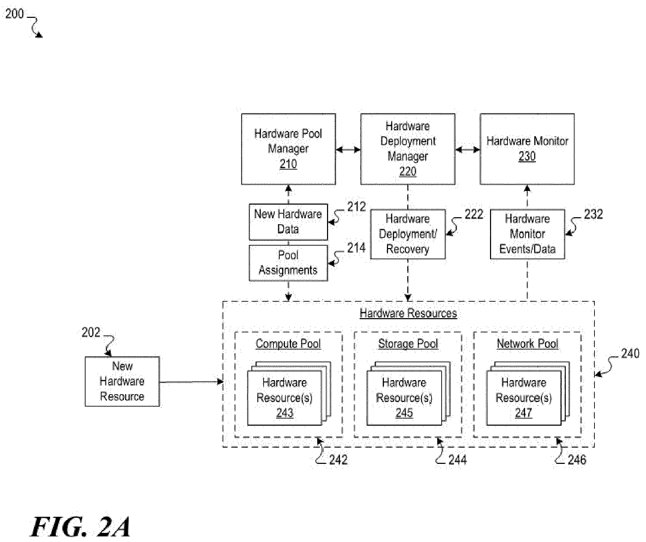

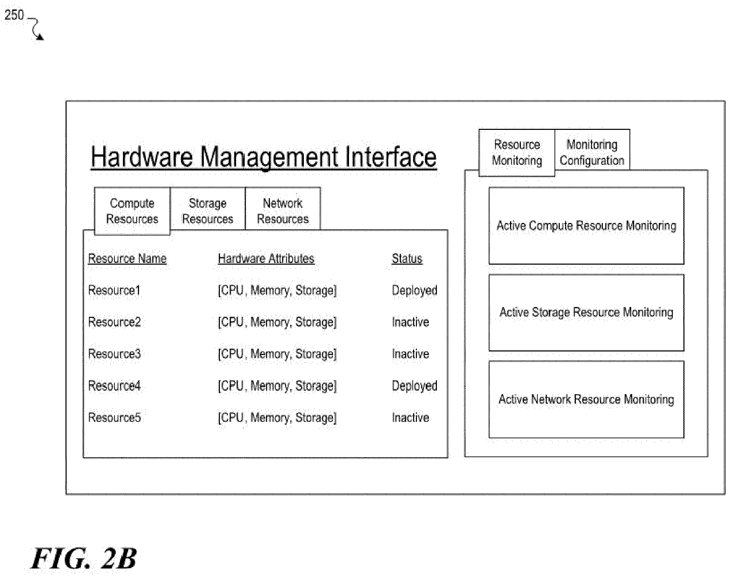

In some implementations, deployed/activated hardware devices may be monitored by the computing device 120 and/or a separate monitoring device. A variety of different aspects of hardware devices may be monitored, including software and/or firmware versions, data processor utilization, memory utilization, data storage utilization, network utilization, number of active virtual machines, and status of available hardware features. Monitoring deployed devices may facilitate determining when new hardware devices should be activated, or when currently deployed hardware devices may be deactivated. For example, utilization thresholds may be used to determine when hardware should be activated or deactivated, e.g., the computing device 120 may deactivate one of multiple deployed compute servers in response to data processor utilization and memory utilization being less than a 20% utilization threshold over a predetermined period of time. As another example, monitoring may be used to determine when hardware devices are to be updated, e.g., when a software or firmware version is out of date, or when a particular feature of a hardware device is to be enabled or disabled. Additional examples regarding the management of hardware devices are provided with respect to FIGs. 2-4.

FIG. 2A is an example data flow 200 depicting the management of hardware devices. The example data flow 200 three computing devices: a hardware pool manager 210, a hardware deployment manager 220, and a hardware monitor 230. The computing devices 210, 220, and 230, may be the same as or similar to the computing device 110 of FIG. 1. For example, they may be any computing devices capable of communicating with hardware resources, such as a server computer or personal computer. While the example data flow 200 depicts three separate computing devices in the hardware pool manager 210, the hardware deployment manager 220, and the hardware monitor 230, these operations performed by these devices may, in some implementations, be included in many other devices, e.g., in a distributed computing environment, or on a single device, e.g., as described with respect to the computing device 110 of FIG. 1. In addition, the depicted devices may operate in an environment with or in communication with many other devices. For example, one or more storage devices, dedicated and/or shared, may be used by the depicted computing devices 210, 220, and 230. As another example, one or more output devices or peripherals may also be in communication with the computing devices 210, 220, and 230, for facilitating user interaction with the devices. In a cloud computing environment, many other devices may communicate with the computing devices 210, 220, and 230, as well as the hardware resources 240 managed by the computing devices.

During operation, a new hardware resource 202 is added to an existing group of hardware resources 240. For example, a new storage device, such as a hard drive or storage array, may be connected to an existing set of hardware resources 240 that may include devices such as server computers, network routers and switches, and other storage devices. The hardware pool manager 210 obtains new hardware data 212 for the new hardware resource 202. The new hardware data 212 may be obtained by the hardware pool manager 210, e.g., by monitoring hardware connections or by receiving the new hardware data 212 from processes operating on the new hardware resource 202 or from a device in communication with the new hardware resource 202. The new hardware data 212 may include a variety of information about the new hardware resource 202, such as hardware attributes of the new hardware resource 202. Using the example of a storage array, the new hardware data 212 may include hardware attributes such as storage capacity, read speed, write speed, RAID status, I/O speed, model number, firmware version number, and software version number(s).

Using the new hardware data 212, the hardware pool manager 210 makes a pool assignment 214 for the new hardware resource 202. Each hardware resource in the example hardware resources 240 are included in one of three resource pools. The example pools include a compute pool 242 for compute resources 243, such as server computers used to host virtual machines; a storage pool 244 for storage resources 245, such as hard drives and hard drive arrays; and a network pool 246 for network resources 247, such as routers, switches, and load balancers. In a situation where the new hardware resource 202 is a storage resource, e.g., a storage array, the hardware pool manager 210 may associate it with the storage pool 244. The pools in which hardware resources 240 are placed are logical pools, e.g., associations managed by the hardware pool manager 210 and based on features of the hardware devices. For example, the storage array may be associated with the storage pool 244 based on the storage capacity and/or model number of the storage array.

After assigning the new hardware resource 202 to one of the resource pools, the hardware pool manager 210 may receive a request associated with a particular hardware type, hardware attribute, or hardware function. For example, the hardware pool manager 210 may receive a request for a type of hardware resource, such as a storage resource, a request for a storage array, or a request for a storage device with a particular attribute/feature, e.g., RAID 0 support. In some implementations a request may be received from a user, and in some implementations the request may be provided by a separate process or device, e.g., based on monitoring the utilization of currently deployed resources.

In response to the request, the pool manager 210 may provide data that represents available resources associated with the request, such as the new hardware resource 202. In an example situation in which a user requests a data storage resource, the hardware pool manager 210 may provide data indicating the available storage resources 245 within the storage pool 244. In the example above, data representing the recently added storage array may be provided in response to the request. The data may include a variety of information related to the resource or resources included in the resource pool associated with the request. In some implementations, the provided data may be used by a separate application or device to determine which hardware resource(s) to deploy. In some implementations, data that represents hardware resources 240 may be provided for display in a user interface, such as the interface depicted in FIG. 2B.

FIG. 2B is an example user interface 250 for displaying information during the management of hardware resources. The example user interface 250 includes tabs for displaying compute resources from a compute resource pool, storage resources from a storage resource pool, and network resources from a network resource pool. The example interface 250 includes data representing names associated with various resources as well as hardware attributes, such as CPU, memory, and storage for various compute resources. Using the storage array example, the data representing the storage array may be accessible through the interface 250, e.g., in the "storage resources" tab.

In the example data flow 200, the hardware deployment manager 220 may cause deployment of the new hardware resource 202. For example, the hardware deployment manager 220 may provide hardware deployment 222 instructions that cause deployment of an available hardware resource. In the storage array example, the hardware deployment manager may send instructions to the new storage array to cause the storage array to activate, and to facilitate the establishment of communications between the new storage array and the cloud computing system for which it is being deployed.

The hardware deployment manager 220 may, in some implementations, facilitate recovery of hardware, e.g., deactivating currently deployed hardware. Recover may be performed in a manner similar to that in which hardware is deployed, e.g., in response to a request sent by a user or automatically based on hardware monitoring. Deactivating a hardware resource may cause the deactivated resource to become an available resource in its corresponding hardware resource pool. Using storage resources as an example, in a situation where more storage devices are deployed than are being used, a storage resource may be deactivated, e.g., to save on maintenance and overhead.

In the example, data flow 200, a hardware monitor 230 is used to monitor the hardware resources 240. Monitoring events and/or data 232, such as usage statistics, fault information, and version checking information, may be collected by the hardware monitor 230 to facilitate decisions regarding hardware resource deployment and/or recovery. Information monitored by the hardware monitor 230 may include, for example, CPU utilization, GPU utilization, RAM utilization, storage utilization, network latency, network throughput, hardware outages, firmware version numbers, and/or software version numbers.

The monitored information may be used by the hardware monitor 230, a user, or another device, to determine when to deploy or recover a hardware resource. For example, the hardware monitor 230 may make monitored information available for viewing in a user interface, such as in the monitoring configuration tab of the example Ul 250, to enable a user to view monitored information and make decisions based on the displayed data.

In some implementations, the hardware monitor 230 may use one or more thresholds for triggering deployment or recovery of hardware, or for triggering display of information or sending of notifications. For example, a data storage utilization threshold, such as 75% storage utilization over the past 5 minutes, may be set by the hardware monitor 230 to trigger a request for additional storage hardware when deployed storage hardware is over 75% utilized over the past 5 minutes. The request may be sent, for example, to the hardware deployment manager 220, to cause deployment of additional storage hardware 245 from the storage pool 244. In some implementations, the hardware monitor 230 may use thresholds to determine whether information is displayed for a user in a user interface, and/or to determine the manner in which it is displayed. For example, monitored information may be presented in a user interface in order of perceived severity, e.g., depicting resources with higher utilization rates more prominently than those with lower utilization rates. As another example, notifications may be triggered in response to various thresholds being met, e.g., a notification may be sent to alert an administrator that CPU utilization is high.

While the example data flow 200 depicts three separate devices being used to manage the hardware resources 240, other configurations and implementations may be used to manage hardware. For example, the functionalities described as being performed by the hardware pool manager 210, the hardware deployment manager 220, and the hardware monitor 230, may be performed by a single computing devices, or by many separate computing devices. E.g., the functionality provided by the hardware deployment manager 220 may be split into a separate device for managing deployments for each different hardware resource pool, and a separate device for managing recovery of hardware devices for each different hardware resource pool. As another example, some functionality, such as hardware connection discovery and management, and/or software deployment and management, may also be included in the depicted devices or separate devices in a system for managing hardware resources. While three different hardware resource pools are depicted for the hardware resources 240 of the example data flow 200, more or less pools may be used. As noted above, the pools may correspond to different types of devices, which may include pooling devices based on functions or capabilities.

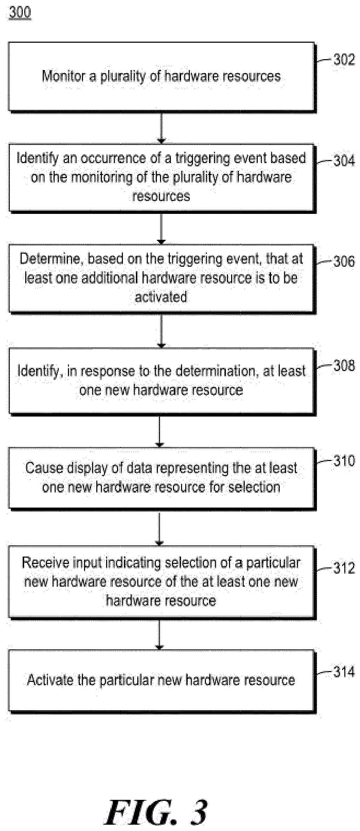

FIG. 3 is a flowchart of an example method 300 for managing hardware devices. The method 300 may be performed by a computing device, such as the computing device described in FIG. 1 or the devices described with respect to FIG. 2A. Other computing devices may also be used to execute method 300. Method 300 may be implemented in the form of executable instructions stored on a machine-readable storage medium, such as the storage medium 130, and/or in the form of electronic circuitry, such as an FPGA or ASIC.

A plurality of hardware resources are monitored (302). For example, hardware devices, such as network devices, server computers, and storage devices, may be monitored by requesting and/or receiving status information and event data that may include a variety of information. Monitored information may include, by way of example, network latency and throughput for network devices, CPU and memory utilization for server computers, and I/O speed and utilized capacity for storage devices.

An occurrence of a triggering event is identified based on the monitoring of the plurality of hardware devices (304). For example, an example triggering event may be a network throughput capacity threshold of 50% over the previous 5 minutes. In this example, a maximum throughput for a network security device operating in a cloud computing system may be 1 Gbps. When data streaming through the network security device reaches an average of 500 Mbps over the past 5 minutes, this meets the example threshold given above, and would be considered a triggering event. The foregoing example is one of many, and many different triggering events may be used for many different types of devices, including multiple triggering events for a single device, and single triggering events based on multiple types of monitored information.

Based on the triggering event, a determination is made that at least one additional hardware resource is to be activated (306). Using the example above, when throughput for a network security devices causes occurrence of a triggering event, it may be determined that an additional network security device is to be activated/deployed. In this example, an additional network security device may be deployed in a manner designed to reduce the utilized network throughput capacity for one or more of the network security devices operating on the cloud computing network, which may reduce the chance that network data may slow down due to a bottleneck. In some implementations, the additional hardware resource(s) may or may not be of the same type of device that caused the triggering event. For example, a determination to activate a load balancing device may be made based on a triggering event related to throughput and/or latency of network switches operating with a system and/or based on the addition of server computers to the system.

In response to the determination, at least one new hardware resource is identified (308). In the example network security device situation above, in response to determining that an additional network security device is to be activated, one or more available network security devices may be identified from a pool of network devices. In some implementations, hardware devices are pooled and/or identified based on their associated type, e.g., based on model number or specification. In this situation, multiple different network security devices that are available for use but not currently deployed in a system, may be identified in response to the determination that additional hardware is to be activated.

In some implementations, hardware resources may be pooled and/or identified based on functionality. In this situation, for example, a function may be identified for an additional hardware resource based on the triggering event, e.g., a network security function may be identified based on the existing network security device(s) causing the triggering event. In this example, a new hardware device may be identified based on functionality, or capability, such as the ability of the new hardware device to perform the network security function associated with the network security devices that caused the triggering event. In implementations where hardware devices may be used for multiple different types of functions, such as software defined networking devices or compute servers that provide hypervisor support for multiple virtual machine types, pooling and identifying hardware devices by function may allow a single hardware device to be identified for many different functions that the device is capable of performing.

Data representing the at least one new hardware resource is displayed for selection (310). Data may be displayed, for example, in a manner designed to allow a user to determine which identified device(s) should be deployed, if any. For example, in a manner similar to that described with respect to the example user interface of FIG. 2B, data specifying features of the identified hardware device(s) may be displayed for the user. In the example network security hardware situation, multiple network security devices may be displayed, along with relevant hardware features, such as the type of network security performed, maximum throughput, expected latency, etc.

Input is received indicating selection of a particular new hardware resource of the at least one new hardware resource (312). For example, using the data displayed for the new hardware resource(s), a user may select a hardware device to be deployed, e.g., through a user interface. In the network security example, a user may select a network security device capable of providing increased throughput, in a manner designed to reduce overall throughput for the network security devices in the system in which the new network security device is to be deployed.

The particular new hardware resource is activated (314). For example, upon receiving the indication that a new network security device was selected by a user, the new network security device may be deployed in the computing system. Activation/deployment of hardware may be cause by instructing a deployment manager or by providing instructions for deployment directly to the device. For example, a software defined networking device may be provided with network data to facilitate connections to various devices within a computing system and a configuration that causes the device to act as a network security device.

In some implementations, triggering events may be used to deactivate hardware resources. For example, a second triggering event may be identified based on the hardware resource monitoring, and a determination may be made that a specific piece of hardware is to be deactivated based on the second triggering event. E.g., a triggering event for compute servers may be set at a threshold of 10% CPU utilization over the past 24 hours, and in a situation where CPU utilization for a group of compute servers does not exceed 10% in a 24 hour period, a determination may be made to deactivate a compute server. After deactivating a hardware device, it may be added to a hardware resource pool. For example, a deactivated compute server may be added to a compute resource pool, e.g., based on its previous functionality and/or the hardware attributes of the underlying hardware device. Deactivated hardware resources that have been placed into a hardware resource pool may be reactivated/redeployed, e.g., in a manner similar to that in which new hardware resources are activated/deployed.

While the example method 300 includes various actions that permit and facilitate user interaction, such as displaying data and receiving input, in some implementations, selection may be performed in whole or in part by a computer. For example, certain triggering events may cause automatic action to take place without user intervention. In this situation, notifications may be sent to a user to indicate actions that were taken. For example, in a situation where a compute server fails in a cloud computing network, a hardware management method/device may treat this as a triggering event and, in response, select an available compute device from a pool of devices and cause that device to activate. The same triggering event may, for example, also cause automatic recall and/or maintenance for the compute device that failed.

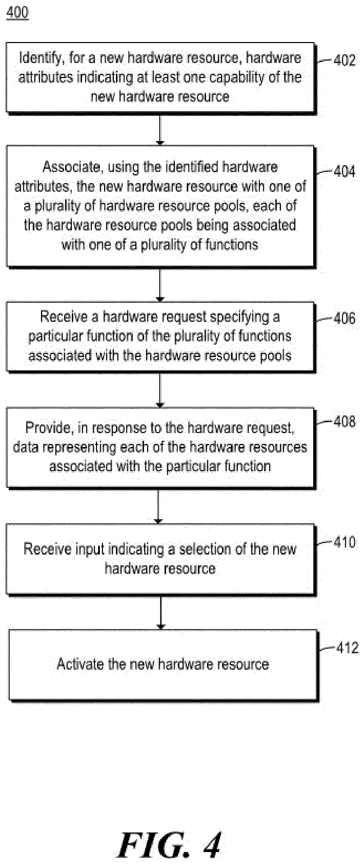

FIG. 4 is a flowchart of an example method 400 for the management of hardware devices. The method 400 may be performed by a computing device, such as a computing device described with respect to FIG. 1 or the devices described with respect to FIG. 2A. Other computing devices may also be used to execute method 400. Method 400 may be implemented in the form of executable instructions stored on a machine-readable storage medium, such as the storage medium 130, and/or in the form of electronic circuitry, such as an FPGA or ASIC.

For a new hardware resource, hardware attributes are identified that indicate at least one capability of the new hardware resource (402). For example, a server computer may be a new hardware device, and its hardware attributes may indicate that the server computer is capable of running a hypervisor to support multiple virtual machines and provide them with GPU access for graphically intensive applications.

Using the identified hardware attributes, the new hardware resource is associated with one of a plurality of hardware resource pools, each of the hardware resource pools being associated with one of a plurality of functions (404). Using the example server computer above, the server computer may be associated with a compute pool for hardware resources associated with hypervisor functionality. In a situation where more granular hardware pools are used, the server computer may be associated with a compute pool for GPU-equipped servers with hypervisor functionality.

A hardware request is received that specifies a particular function of the plurality of functions associated with the hardware resource pools (406). For example, a function, device, or user may send a request for a hardware resource with a particular function, such as a request for a compute server. Other information

In response to the hardware request, data representing each of the hardware resources associated with the particular function are provided (408). For example, in response to a request for hardware resources associated with compute server functionality, a list of hardware resources associated with the compute pool, and their associated hardware attributes, may be provided in response, e.g., to the requesting function, device, or a user display device.

Input is received indicating a selection of the new hardware resource (410). For example, a user may select, through a user interface, the example server computer that was added to the compute pool. In implementations that select hardware resources without user input, the selection may be performed by a computing device or selection function, e.g., based on how well the new hardware resource's hardware attributes match hardware attributes that may be included in the hardware request.

The new hardware resource is activated (412). Activation may be performed by instructing a separate device or function to activate the new hardware resource, or by sending instructions directly to the new hardware device. For example, the new server computer may be provided with instructions to deploy itself in a computing system using a particular image file that enables the new server computer to deploy as a compute server providing hypervisor capabilities and virtual machines with access to GPU resources.

In some implementations, as indicated above, monitoring may be used to facilitate deployment of hardware devices. For example, the active/deployed resources of a particular hardware resource pool may be monitored, and based on the occurrence of a triggering event associated with that hardware resource pool, a request to activate a new hardware resource in that pool may be triggered. For example, when a group of compute servers reaches a CPU utilization threshold, this may trigger a request for a new compute server to be deployed.

Various portions of the methods 300 and 400 may be performed by one or multiple computing devices. For example, one computing device may be responsible for associating hardware resources with resource pools, another computing device may be responsible for monitoring deployed hardware devices, and another computing device may be used to cause deployment or recovery of hardware resources from/to the resources pools.

The foregoing disclosure describes a number of example implementations for managing hardware devices. As detailed above, examples provide a mechanism for using hardware attributes to pool hardware resources based on type, capabilities, and/or functionality, and use the pools along with monitoring and various interfaces to facilitate deployment and recovery of hardware resources connected in a computing system.

## Claims

1. A computing device for managing hardware resources, the computing device comprising:
a hardware processor; and
a data storage device storing instructions that, when executed by the hardware processor, cause the hardware processor to:
identify, for a new hardware resource, hardware attributes indicating at least one capability of the new hardware resource;
associate, using the identified hardware attributes, the new hardware resource with one of a plurality of hardware resource pools, each of the hardware resource pools being associated with one of a plurality of functions;
receive a hardware request specifying a particular function of the plurality of functions associated with the hardware resource pools;
provide, in response to the hardware request, data representing the new hardware resource; and
cause deployment of the new hardware resource for performing the particular function.

2. The computing device of claim 1, wherein the data representing the new hardware resource specifies the identified hardware attributes of the new hardware resource.

3. The computing device of claim 1, wherein the data representing the new hardware resource is provided for display on a display device associated with the computing device.

4. The computing device of claim 1, wherein deployment of the new hardware resource is performed in response to user input indicating selection of the new hardware resource.

5. The computing device of claim 1, wherein the hardware request includes a request for additional hardware from a hardware resource pool associated with the particular function.

6. The computing device of claim 1, wherein the plurality of functions include:
a compute function;
a storage function; and
a network function.

7. The computing device of claim 1, wherein the hardware attributes include at least two of:
hardware model;
processor core count;
random access memory capacity;
hypervisor type;
graphical processing unit type;
local flash capacity;
data storage capacity;
data storage type; or
network speed.

8. A method for managing hardware resources, implemented by a hardware processor, the method comprising:
monitoring a plurality of hardware resources;
identifying an occurrence of a triggering event based on the monitoring of the plurality of hardware resources;
determining, based on the triggering event, that at least one additional hardware resource is to be activated;
identifying, in response to the determination, at least one new hardware resource;
causing display of data representing the at least one new hardware resource for selection;
receiving input indicating selection of a particular new hardware resource of the at least one new hardware resource; and
activating the particular new hardware resource.

9. The method of claim 8, further comprising:
determining, based on the triggering event, a particular function for the at least one additional hardware resource, the particular function being one of a plurality of functions performed by the plurality of hardware resources.

10. The method of claim 9, wherein the at least one new hardware resource is identified based on a function associated with the at least one new hardware resource matching the particular function.

11. The method of claim 9, wherein the plurality of functions include:
a compute function;
a storage function; and
a network function.

12. The method of claim 8, wherein the triggering event includes the plurality of hardware resources meeting a resource utilization threshold.

13. The method of claim 8, further comprising:
identifying an occurrence of a second triggering event based on the monitoring of the plurality of hardware resources;
determining, based on the second triggering event, that a specific hardware resource of the plurality of hardware resources is to be deactivated;
deactivating the specific hardware resource; and
associating, using a prior function of the specific hardware resource, the specific hardware resource with one of a plurality of hardware resource pools, each of the hardware resource pools being associated with one of a plurality of functions.

14. A non-transitory machine-readable storage medium encoded with instructions executable by a hardware processor of a computing device for managing hardware resources, the machine-readable storage medium comprising instructions to cause the hardware processor to:
identify, for a new hardware resource, hardware attributes indicating at least one capability of the new hardware resource;
associate, using the identified hardware attributes, the new hardware resource with one of a plurality of hardware resource pools, each of the hardware resource pools being associated with one of a plurality of functions;
receive a hardware request specifying a particular function of the plurality of functions associated with the hardware resource pools;
provide, in response to the hardware request, data representing each of the hardware resources associated with the particular function;
receive input indicating a selection of the new hardware resource; and
activate the new hardware resource.

15. The storage medium of claim 14, wherein the data representing each of the hardware resources associated with the particular function includes, for each of the hardware resources associated with the particular function, at least one hardware attribute.

16. The storage medium of claim 14, wherein the data representing each of the hardware resources associated with the particular function is provided for display on a display device associated with the computing device.

17. The storage medium of claim 14, wherein the instructions further cause the hardware processor to:
monitor a particular hardware resource pool that includes a plurality of hardware resources;
determine, based on a triggering event associated with the plurality of hardware resources, that at least one additional hardware resource is to be added to the particular hardware resource pool; and
provide the hardware request specifying the particular function based on the particular function being associated with the particular hardware resource pool.

18. The storage medium of claim 17, wherein the triggering event includes the plurality of hardware resources meeting a resource utilization threshold.

19. The storage medium of claim 14, wherein the plurality of functions include:
a compute function;
a storage function; and
a network function.

20. The storage medium of claim 14, wherein the hardware attributes include at least two of:
hardware model;
processor core count;
random access memory capacity;
hypervisor type;
graphical processing unit type;
local flash capacity;
data storage capacity;
data storage type; or
network speed.
